# EUROPEAN PATENT SPECIFICATION

(11) **EP 1 418 041 B1**
(45) Date of publication and mention of the grant of the patent: **14.10.2009**
(21) Application number: 03025222.5
(22) Date of filing: 05.11.2003
(51) Int. Cl.: B29C 47/06, B29C 47/28, B29C 47/70, B29C 49/04

(54) **Extrusion head**
Extrusionskopf
Tête d'extrusion

(30) Priority: 08.11.2002 IT BO20020708
(43) Date of publication of application: 12.05.2004
(73) Proprietor: TECHNE TECHNIPACK ENGINEERING ITALIA S.p.A., 40023 Castel Guelfo (BO) (IT)
(72) Inventor: Castellari, Fabrizio, 40068 San Lazzaro di Savena, Province of Bologna (IT)
(74) Representative: Porsia, Dino

(56) References cited:
- DE-C1- 19 535 749
- JP-A- 56 024 133
- JP-A- 59 070 523
- US-A1- 2002 028 309

## Description

The invention finds industrial application in machines for producing thermoplastic containers by the method of thermoforming by blowing. These machines are usually coupled with an extruder with a die or extrusion head designed to produce tubular thermoplastic preforms known as parisons, which exit vertically downwards from the said extrusion head. Lengths of parison are cyclically enclosed between a mould and a countermould to form bubbles which are then separated from the continuous preform by a transverse cutting operation. The mould-countermould assembly then moves to a blowing station where the bubbles of plastic contained in this assembly are inflated with air blown in through nozzles directed into the mouth of the container, which is formed at this stage by plastic deformation and by adhesion between the bubble and the internal surfaces of the said assembly, which then opens and returns to the extruder to repeat the cycle, while the formed container remains in the blowing station for completion of the forming cycle, which will not be considered further here, being extraneous to an understanding of the invention.

The plastic fed to the extruder, usually in granular form, is pushed through the extruder by the rotation of its internal screw, and the stream of plastic is heated inside this component, reduced to a pasty condition then finally discharged through a die or extrusion head which fundamentally consists of a hollow body and a coaxial pin. These form a vertical cylindrical chamber which is open at the bottom, its top end being fed with the stream of plastic material and its bottom end discharging the parison which is then fed to the mould-countermould assembly in which the containers are formed by the aforementioned blowing technique. Inside the upper end of the extrusion head, passages are formed for the stream of plastic in the pasty condition, which must be distributed as uniformly and homogeneously as possible in the said cylindrical chamber in order to form a continuous tube having the desired thickness. The extrusion head may also be designed to deposit two or more layers of plastic, each coming from an individual extruder, on top of each other by coaxial extrusions occurring in succession beginning with the innermost tubular layer, in such a way as to form a multilayer parison which may have a high-cost material on the inner and/or outer layer(s) only, recycled material in the intermediate layer(s) and that may be coloured in the outer layer only - all of which provisions offer economic advantages.

The extrusion heads produced in the prior art do not always perform satisfactorily, including in relation to the diverse characteristics of the plastics present in the market, and in particular present problems in maintaining a uniform thickness of the extruded tube and in facilitating and speeding up the process of changing the colour of the plastics being extruded. These problems result from the fact that the internal channels of present-day extrusion heads have zones of confluence of the stream of the plastic in the pasty condition where material tends to accumulate and/or concentrate, leading to localized thickening of the walls of the extruded tube and greater difficulty in getting rid of the colour used previously.

Another problem resulting from the use of traditional heads is the complexity of the design of the heads for their adaptation to the diverse demands of use, inasmuch as the internal channels of the present-day heads have to be produced by complex operations, often on machine tools with five axes and numerical control. The prior art is documented for example in British Patent 758 367 and French Patent 1 084 310, both from 1952 and in the name of LMP.

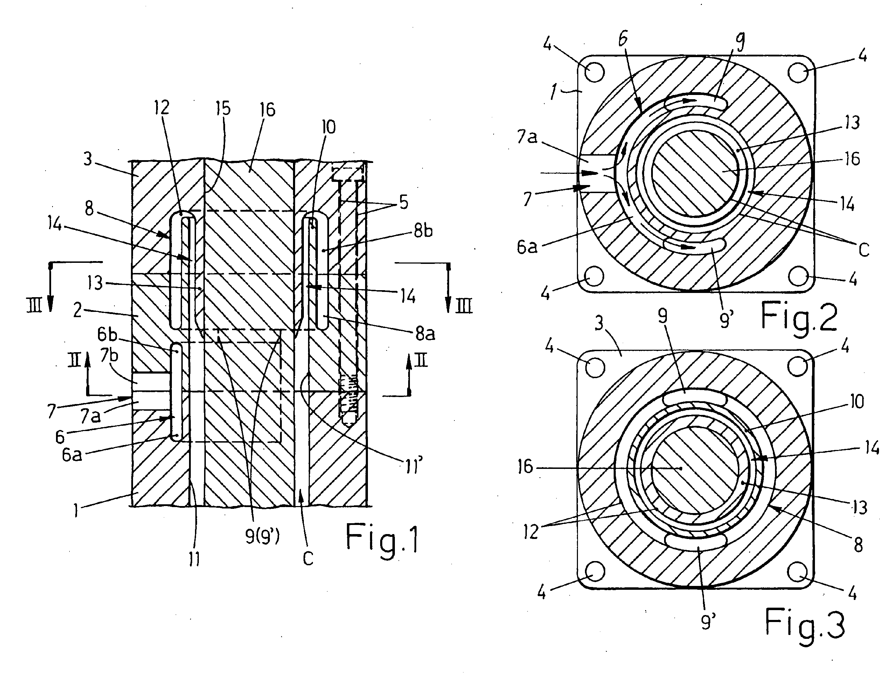

Extrusion heads produced by simpler turning operations are disclosed for example in European Patent 568 544 (CGE) from 1991 and still earlier in German Patents Nos. 2 712 910 and 2 712 970 (Mauser) from 1977. The extrusion head illustrated in Figure 2 of German Patent 2 712 910 causes the stream of plastic arriving from the extruder to be fed through a first channel coaxial with the head, at points separated by an angular distance of 180° in two superposed toroidal chambers that are similarly coaxial with the head, and leading away from these chambers are cylindrical chambers which, via an outwardly directed hairpin bend of constant cross section, flow together into a single annular mouth which discharges into the down channel of the extruder head. Inside this head the central wall defining the aforementioned cylindrical chambers is interrupted by areas of structural connection that interrupt the continuity of the stream and give rise to concentrations of material and to the problems described above.

This problem was solved in the extrusion head disclosed in European Patent No. 770 469 (W. MULLER) from 1995, in which the forked plastic-feed channel connected to the extruder is situated coaxially and parallel between the two toroidal chambers, from which there are conical chambers branching off tangentially, circumscribed by the said toroidal chambers and coming together in a single annular mouth which discharges into the down channel of the extrusion head. This head is composed of four superposed discs, the superposed surfaces of which are machined by turning and milling to produce the two symmetrical portions that form each of the said chambers, in such a way that the chambers are not interrupted by structural connections. However, these heads have the disadvantage that they have annular chambers of toroidal type and of limited height. This means that the openings by which the material enters these chambers are a short distance away from the inclined tangential discharge chamber, so that, especially with the tangential orientation of this latter chamber, the material coming out of the said feed openings tends to flow more easily directly towards the conical chamber, with non-uniform distribution and the consequent problems of non-uniformity in the thickness of the extruded tube and colour changing problems, even though, in an attempt to avoid this problem, a difficult and costly milling operation is proposed to shape the central part of the toroidal chamber opposite the centre line of the said plastic feed openings, in order to produce curved cusps on this part of the chamber to subdivide the flow symmetrically, much like the cusps used in the cups of Pelton wheels, giving the cross section of the said toroidal chambers a progressively decreasing value towards the said inlet openings.

A further similar extrusion head is shown in US 2002 028 309 A1.

It is an object of the invention to overcome these problems of the prior art, partly in order to simplify the making of the extrusion heads when they need adapting to the diverse demands of use, with the following idea for a solution.

The stream of plastic coming from the extruder is fed to the intermediate part of a channel having in plan view the shape of a sector of a circle with an amplitude greater than 180°, with its centre on the axis of the extrusion head, and having at its opposite ends identical openings having in plan view an elongate kidney-shaped configuration, which open at the base of a first annular and cylindrical chamber that is likewise coaxial with the extrusion head and is of suitable height, preferably greater than the height of the said forked feed channel and having the same distance between the inner and outer walls. In this first annular and cylindrical chamber the plastic rises without meeting any obstacle and at the end of this chamber the plastic follows a hairpin bend and enters a second annular and cylindrical chamber in which the distance between the walls is less than that between those of the previous chamber, which is coaxial with and internal to that chamber and likewise free of obstacles, the lower mouth of which directly or indirectly feeds the down channel of the head defined internally by the axial pin of the said extrusion head.

A head module according to the invention is composed of just three superposed plates fixed together, where the feed duct designed to be connected to the extruder and the forked flow-dividing channel are formed for example in the contact surfaces between the lower plate and the intermediate plate, while the first and second annular cylindrical chambers connected together by a hairpin bend at the top are formed in the contact surfaces of the intermediate plate and upper plate, by simple turning operations. In particular, the intermediate plate includes at the top a portion of the first or larger-diameter annular and cylindrical chamber, with the lower openings connecting to the ends of the subjacent forked feed channel and the inner wall of the said chamber portion is defined by a cylindrical collar that has a rounded upper edge and projects suitably from the upper face of the intermediate plate. The upper plate includes, open on the lower face, an annular and cylindrical channel having a width such as to define both the first and second of the said annular and cylindrical chambers and the inner wall of this channel is defined by a cylindrical collar which projects to an appropriate distance from the lower face of the said plate. This large annular channel of the upper plate receives the projecting portion of the said collar of the intermediate plate, which sits coaxially next to the collar of the upper plate, dividing the said channel into two adjacent parts, of which the outer part completes the outer annular and cylindrical chamber and the inner part defines the inner cylindrical annular chamber in between the two aforementioned collars. The pin passes without lateral leaks through the collar of the upper plate and defines, with the inner surface of the cavities of the first and second plates, the down channel of the extrusion head. Because of the great distance of the two 180°-separated product inlet openings, from the hairpin bend connecting the two successive annular and cylindrical chambers and because the section of the final cylindrical chamber is less than that of the cylindrical chamber upstream thereof, the stream of product is distributed uniformly in both the first and second annular chambers, making for rapid purging when changing colours. The product feed openings, unlike known openings which are circular, are stretched out to give a kidney shape for better distribution of the material in the first of the annular and cylindrical chambers. The paths of these openings may be straight and parallel with the axis of the head, or may diverge towards the receiving chamber, or may be straight but inclined in contrary directions in order to give the two streams of plastic fed to the first chamber a helical movement with the same direction of rotation. Lastly, it will be possible to adapt the head to the diverse demands of flowrate and use by simple turning operations to adapt the cross sections of the said two annular and cylindrical chambers to the particular requirements.

Other features of the invention, and the advantages procured thereby, will become clearer in the course of the following description of a preferred embodiment thereof, illustrated purely by way of non-restrictive example, in the figures of the appended sheets of drawings, in which:
- Fig. 1 shows a head according to the invention in section on a vertical plane that contains the longitudinal axis of the said head;
- Figs 2 and 3 show different constructional details of the head seen in Figure 1, taken on the cross sections II-II and III-III;
- Figs 4 and 5 show the head from Figure 1 with other modifications in the feed channels; and
- Fig. 6 shows a longitudinal section through a multilayer extrusion head made up of a plurality of head modules as in Figure 1.

As can be seen in Figures 1, 2 and 3, an extrusion head module according to the invention is composed of three metal plates 1, 2 and 3 which may for example be round or square in plan view, with rounded corners and provided at these corners with through holes 4, optionally partly threaded, so that the plates can be stacked on top of each other and closed into a pack one against the other by means of screws or tie rods 5. The upper face of the lower plate 1 designed to be in contact with the intermediate plate 2 is formed, for example, by milling, to produce a cylindrical channel 6a in the shape of a sector of a circle with centre of curvature on the axis of the head and an angular amplitude suitably greater than 180° and depth greater than its own width, having mutually parallel side walls and a rounded end wall. Halfway around the channel 6a a semicircular-section hole 7a opens off radially.

The lower face of the intermediate face 2 is formed to produce a cylindrical channel in the shape of the sector of a circle 6b symmetrical with the channel 6a, with a central radial branch 7b, also symmetrical with the branch 7a, so that together they form a cylindrical chamber in the shape of a sector of a circle 6 coaxial with the head and with the radial central branch 7 to which the extruder output is connected.

The upper face of the intermediate plate 2 is shaped to produce an angular and cylindrical channel 8a, coaxial with the head, having a depth greater than its own width, having mutually parallel side walls and having a rounded end wall. The distance between the walls of the channel 8a is preferably the same as that between the walls of the sectoral chamber 6, so that vertical kidney-shaped openings 9, 9' at the tops of the ends of the lower chamber 6 open out into areas of the upper channel 8a separated by an angular distance of 180. The inner wall of the channel 8a is defined by a cylindrical collar 10 which projects a suitable distance from the upper face of the plate 2 and has a suitably rounded upper edge. In the example shown in Figure 1, the plates 1 and 2 have equal-diameter axial holes 11, 11' defining the outer wall of the down channel C of the extrusion head.

The lower face of the upper plate 3 is shaped to produce an annular and cylindrical channel 12 which may for example have the same depth as the aforementioned channel 8a, has the same outer diameter, has an inner diameter suitably less than the inner diameter of the collar 10 and has an inner wall defined by a cylindrical collar 13 projecting a suitable distance from the lower face of the plate 3, the end of which is suitably levelled. When the plate 3 is placed on top of the plate 2, the collar 10 fits into the channel 12 and is coaxially adjacent to the collar 13, dividing the said channel 12 into two parts, namely a channel 8b that is generally symmetrical with the lower channel 8a, and an annular and cylindrical chamber 14, the distance between whose walls is less than that between the walls of the annular and cylindrical chamber 8 formed by 8a and 8b and connected at the top by an appropriate junction to the said outer chamber 8.

The chamber 8, as already said, has a distance between its walls that is equal to that between the walls of the forked chamber 6 but is preferably characterized by a greater height.

In the upper plate 3 is an axial hole 15 whose diameter is suitably less than that of the axial holes 11, 11' of the other plates. This hole 15 is filled leaktightly by the pin 16 which also passes through the other plates and defines the inner wall of the down channel C of the extrusion head.

The plastic arriving from the extruder through the radial hole 7 enters the cylindrical and forked chamber 6, rises through the elongate end slots 9, 9', passes uniformly into the annular chamber 8 without encountering any obstacle all the way around the fork circumference, then negotiates the hairpin bend connection connecting the top of this chamber to the smaller-section descending chamber 14, flows down through this chamber, again without encountering any obstacle at any point around the entire circumference, and eventually passes out through the down channel C of the extrusion head. The smaller cross section of the chamber 14 compared to the chamber 8, the large height of these chambers, the greater height of these chambers compared with the height of the feed chamber 6 and the elongate kidney shape of the feed windows 9, 9' all mean that the plastic enters the chamber 8 uniformly before reaching the final descending chamber 14 with uniform distribution of pressure and flowrate, in such a way that during colour changes, the new plastic rapidly and completely replaces the plastic of the previous flow, with all the attendant advantages.

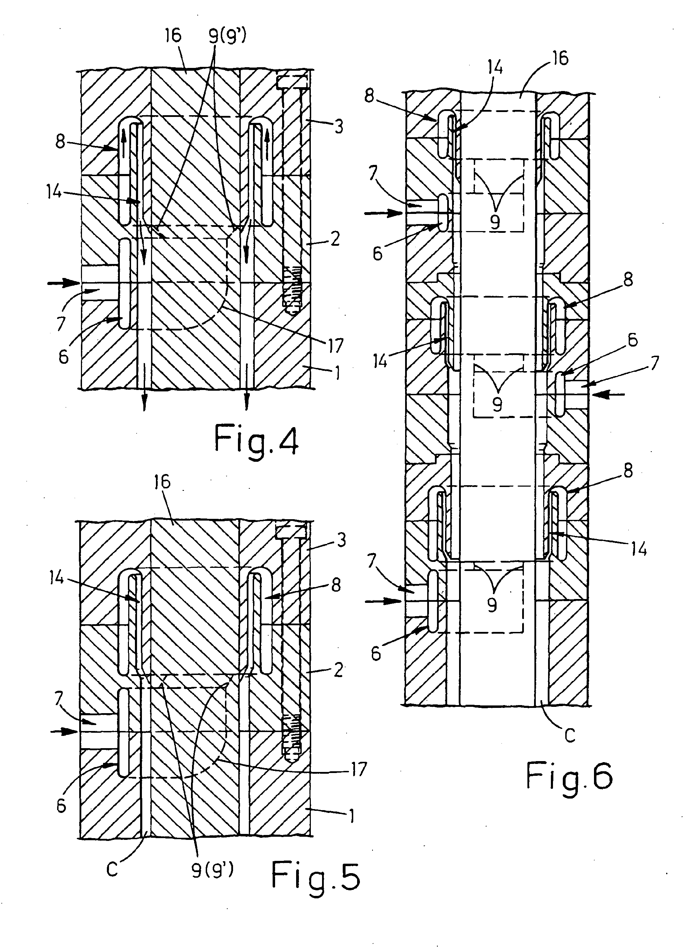

The bottom corners of the forked chamber 6, being remote from the discharge slots 9, 9' and being sharply angled, could collect stagnant plastic and cause problems when changing colours. As illustrated in Figure 4, to avoid this possible disadvantage the ends of the lower channel 6a could be suitably rounded to a curve 17 which is then connected suitably to the ends of the upper channel 6b. The same Figure 4 also shows that for more uniform distribution in the chamber 8 of the plastic arriving from the slots 9, 9', the slots could be structured such that they diverge upwards, or, as illustrated in the variant shown in Figure 5, the same slots 9, 9' could be of constant section but inclined with their ends pointing in contrary directions so as to give the ascending stream of material a rotational component. All of this will be obvious to those skilled in the art, who will have no difficulty carrying it out.

It will be obvious that in order to adapt the head to the differing demands of use, it will be sufficient to design the appropriate flowrate values into the forked feed chamber 6 and into the annular, cylindrical and coaxial chambers 8 and 14, the latter being done by quick and easy turning operations.

Figure 6 illustrates a multilayer extrusion head capable for example of producing parisons with three superposed layers of plastic. The head is formed by the modular combination of three heads of the type shown in Figure 1 in which the cross sections of the various chambers increase from the top down, as each successive stage has to form a tubular layer of increasing diameter and therefore, while producing the same thickness, requires more material. It can be seen in Figure 6 that, unlike Figures 1, 4 and 5, the outer side wall of the down channel C of the extrusion head could be structured, immediately downstream of each annular chamber 14 with a diameter smaller than the outer diameter of this chamber.

## Claims

1. Head for the extrusion or coextrusion of tubular thermoplastic preforms, particularly for machines that produce containers by the blowing technique, the head being composed of superposed plates or discs, in whose superposed faces there are formed, by operations of for example drilling, turning and milling, the symmetrical parts forming the chambers that are to carry the stream of plastic coming from the extruder, which is fed to the head through a radial hole and which must arrive with a uniform distribution in terms of flowrate and pressure in the tubular coaxial down channel (C), of the said head, wherein the stream of plastic coming from the extruder is fed to the intermediate part of a forked chamber (6) having in plan view the shape of the sector of a circle with an angular amplitude suitably greater than 180°, with its centre on the axis of the extrusion head, and having at its opposite ends identical openings (9, 9') separated by an angular distance of 180°, which head is **characterized in that** the openings open at the base of a first annular and cylindrical chamber (8) that is likewise coaxial with the extrusion head and is of suitable height, where the plastic rises without meeting any obstacle and at the end of which first chamber the plastic follows a hairpin bend and enters a second annular and cylindrical chamber (14) coaxial with and internal to the previous chamber and likewise free of obstacles, the lower mouth of which directly or indirectly feeds the down channel (C) of the head, in such a way that the distance between the walls of the said last second annular and cylindrical chamber (14) is less than the distance between the walls of the upstream first annular and cylindrial chamber (8).

2. Extrusion head according to Claim 1, in which the forked feed chamber (6) is cylindrically shaped with rounded bases and the distance between the walls of this forked chamber (6) is equal to that between the walls of the annular and cylindrical chamber (8) above it.

3. Extrusion head according to Claim 2, in which the first annular and cylindrical chamber (8), situated above the forked feed chamber (6) has a greater height than this forked chamber.

4. Extrusion head according to Claim 1, in which the openings (9, 9') that connect the ends of the forked chamber (6) to diametrically opposite zones of the base of the first annular and cylindrical chamber (8) are kidney-shaped in plan view.

5. Extrusion head according to Claim 1, in which the openings (9, 9') that connect the ends of the forked chamber (6) to diametrically opposite zones of the base of the first annular and cylindrical chamber (8) are of constant cross section and are straight and parallel to the axis of the head.

6. Extrusion head according to Claim 1, in which the openings (9, 9') that connect the ends of the forked chamber (6) to diametrically opposite zones of the base of the first annular and cylindrical chamber (8) have their longitudinal axis parallel to the axis of the said head and are of a shape that widens progressively towards the said chamber (8).

7. Extrusion head according to Claim 1, in which the openings (9, 9') that connect the ends of the forked chamber (6) to diametrically opposite zones of the base of the first annular and cylindrical chamber (8) are of constant cross section or of a cross section that widens progressively towards the said chamber (8) and their longitudinal axes are inclined in contrary directions, in such a way as to give the stream of plastic arriving in the said chamber (8) a composite movement of ascension and rotation.

8. Extrusion head according to Claim 1, **characterized in that** each module connected to an extruder is composed of three plates (1, 2, 3) stacked on top of each other and held together by means of screws or bolts (5).

9. Extrusion head according to Claim 8, in which the complementary and symmetrical parts (7a, 7b and 6a, 6b) that form a feed duct (7) connected to the extruder, and the subsequent cylindrical and forked chamber (6) which divides the stream of plastic into two, are produced for example by milling and drilling into the contact surfaces of the lower plate (1) and of the intermediate plate (2), while the first (8) and second (14) of the annular and cylindrical chambers, connected together in a hairpin bend at the consecutive and upper end, are produced in the contact surfaces of the intermediate plate (2) and of the upper plate (3) by simple turning operations.

10. Extrusion head according to any of the previous claims, in which the corners of the lower portion (6a) of the forked plastic-feed chamber (6) may be suitably rounded to a curve (17) leading into a suitable join with the ends of the upper portion (6b) of the same forked chamber (6).

11. Extrusion head according to Claim 9, in which the intermediate plate (2) includes, open on its upper face, a portion (8a) of the first or larger-diameter annular and cylindrical chamber (8), with the lower openings (9, 9'), 180° apart from each other, for connection to the ends of the subjacent forked plastic-feed chamber (6) and the inner wall of the said chamber portion (8a) is defined by a cylindrical collar (10) having a rounded upper edge and projecting suitably from the upper face of this plate (2), the upper plate (3) being provided on its lower face with an annular and cylindrical channel (12), the end wall of which is rounded and which is open at the bottom and of an amplitude such as to be able to define both the first and second of the said annular and cylindrical chambers (8, 14) and the inner wall of this channel is defined by a cylindrical collar (13) which projects to an appropriate distance from the lower face of this plate (3), the whole being so designed that the said channel (12) of the upper plate receives the projecting portion of the said collar (10) of the intermediate plate, which sits coaxially next to the said collar (13) of the upper plate, dividing the said channel (12) into two adjacent parts communicating with each other at the top by a rounded hairpin-bend connection, of which the outer part completes the annular and cylindrical outer chamber (8) and the inner part defines the inner annular cylindrical chamber (14) in between the two aforementioned collars.

12. Extrusion head according to Claim 11, in which the axial pin (16) of the said head passes without lateral leaks through the inner collar (13) of the upper plate (3) and defines the inner wall of the down channel (C) of the said head, the outer wall of which is defined by the inner axial holes (11, 11') of the lower plate (1) and of the intermediate plate (2).

13. Extrusion head according to one or more of the previous claims, **characterized in that** two or more head modules can be stacked coaxially on top of each other to form coextruded tubular preforms in such a way that the various annular and cylindrical chambers of each head module are designed with cross sections that increase appropriately from the top down.

## Patentansprüche

1. Kopf für die Extrusion oder Koextrusion von röhrenförmigen thermoplastischen Vorformlingen, insbesondere für Maschinen, die Behälter in der Blasformtechnik herstellen, wobei der Kopf aus übereinander gelegten Platten oder Scheiben besteht und in den übereinanderliegenden Flächen durch Vorgänge des Bohrens, Drehens oder Fräsens die symmetrischen Teile ausgebildet sind, die die Kammern bilden, die zum Leiten des aus dem Extruder kommenden Stromes aus Kunststoff dienen, der dem Kopf durch eine Radialbohrung zugeführt wird und der mit einer gleichmäßigen Verteilung im Hinblick auf die Fließgeschwindigkeit und den Druck in einen röhrenförmigen, koaxialen Abwärtskanal (C) des Kopfes gelangen muss, wobei der aus dem Extruder kommende Kunststoffstrom dem Zwischenteil einer Kammer (6) zugeführt wird, die in Draufsicht die Form eines Kreissektors mit einer Winkelerstreckung von geeigneterweise mehr als 180° besitzt, mit ihrer Mitte auf der Achse des Extrusionskopfes liegt und an ihren entgegengesetzt liegenden Enden identische Öffnungen (9, 9') aufweist, die durch einen Winkelabstand von 180° getrennt sind, wobei der Kopf **dadurch gekennzeichnet ist, dass** die Öffnungen sich am Boden einer ersten ringförmigen und zylindrischen Kammer (8) öffnen, die ebenfalls koaxial zu dem Extrusionskopf ist und eine geeignete Höhe aufweist, wo der Kunststoff, ohne auf irgendein Hindernis zu treffen, aufsteigt und am Ende dieser ersten Kammer einer Haarnadelbiegung folgt und in eine zweite ringförmige und zylindrische Kammer (14) eintritt, die koaxial innerhalb der vorherigen Kammer liegt und gleichfalls frei von Hindernissen ist, deren untere Mündung direkt oder indirekt den Abwärtskanal (C) des Kopfes in solcher Weise versorgt, dass der Abstand zwischen den Wandungen der letzten zweiten ringförmigen und zylindrischen Kammer (14) kleiner als der Abstand zwischen den Wandungen der stromaufwärts liegenden ersten ringförmigen und zylindrischen Kammer (8) ist.

2. Extrusionskopf nach Anspruch 1, bei welchem die gabelförmige Versorgungskammer (6) zylindrisch mit abgerundeten Böden geformt ist und der Abstand zwischen den Wandungen dieser Kammer (6) gleich dem zwischen den Wandungen der ringförmigen und zylindrischen Kammer (8) oberhalb von ihr ist.

3. Extrusionskopf nach Anspruch 2, bei welchem die erste ringförmige und zylindrische Kammer (8), die oberhalb der gegabelten Versorgungskammer (6) liegt, eine größere Höhe als die gegabelte Kammer besitzt.

4. Extrusionskopf nach Anspruch 1, bei welchem die Öffnungen (9, 9'), die die Enden der gegabelten Kammer (6) mit diametral gegenüberliegenden Bereichen des Bodens der ersten ringförmigen und zylindrischen Kammer (8) verbinden, in Draufsicht nierenförmig sind.

5. Extrusionskopf nach Anspruch 1, bei welchem die Öffnungen (9, 9'), die die Enden der gegabelten Kammer (6) mit diametral gegenüberliegenden Bereichen des Bodens der ersten ringförmigen und zylindrischen Kammer (8) verbinden, einen gleichmäßigen Querschnitt besitzen und gerade und parallel zu der Achse des Kopfes liegen.

6. Extrusionskopf nach Anspruch 1, bei welchem die Öffnungen (9, 9'), die die Enden der gegabelten Kammer (6) mit diametral gegenüberliegenden Bereichen des Bodens der ersten ringförmigen und zylindrischen Kammer (8) verbinden, mit ihren Längsachsen parallel zu der Achse des Kopfes liegen und eine Form besitzen, die sich progressiv zu der Kammer (8) hin aufweitet.

7. Extrusionskopf nach Anspruch 1, bei welchem die Öffnungen (9, 9'), die die Enden der gegabelten Kammer (6) mit diametral gegenüberliegenden Bereichen des Bodens der ersten ringförmigen und zylindrischen Kammer (8) verbinden, einen konstanten Querschnitt oder einen sich in Richtung der Kammer (8) progressiv aufweitenden Querschnitt haben und ihre Längsachsen in entgegengesetzte Richtungen in solcher Weise geneigt sind, dass sie dem in der Kammer (8) ankommenden Kunststoffstrom eine Bewegungskomponente des Aufsteigens und der Rotation verleihen.

8. Extrusionskopf nach Anspruch 1, **dadurch gekennzeichnet, dass** jedes Modul, das an einen Extruder angeschlossen ist, aus drei Platten (1, 2, 3) besteht, die aufeinander gestapelt und mit Hilfe von Schrauben oder Bolzen (5) zusammengehalten sind.

9. Extrusionskopf nach Anspruch 8, bei welchem die komplementären und symmetrischen Teile (7a, 7b und 6a, 6b), die einen Versorgungskanal (7) bilden, der mit dem Extruder verbunden ist, und die nachfolgende zylindrische und gegabelte Kammer (6), die den Kunststoffstrom teilt, beispielsweise durch Fräsen und Bohren in den Kontaktflächen der unteren Platte (1) und der Zwischenplatte (2) hergestellt werden, während die erste (8) und zweite (14) ringförmige und zylindrische Kammer, die miteinander in einer Haarnadelbiegung an dem aufeinanderfolgenden und oberen Ende verbunden sind, in den Kontaktflächen der Zwischenplatte (2) und der oberen Platte (3) durch einfache Drehvorgänge hergestellt sind.

10. Extrusionskopf nach einem der vorhergehenden Ansprüche, bei welchem die Ecken des unteren Bereiches (6a) der gegabelten Kunststoffversorgungskammer (6) in geeigneter Weise zu einer Kurve (17) abgerundet sein können, die in eine geeignete Verbindung mit den Enden des oberen Bereiches (6b) der gleichen gegabelten Kammer (6) führt.

11. Extrusionskopf nach Anspruch 9, bei welchem die Zwischenplatte (2) einen an ihrer oberen Seite offenen Bereich (8a) der ersten ringförmigen und zylindrischen Kammer (8) mit größerem Durchmesser mit den unteren Öffnungen (9, 9'), die 180° voneinander entfernt liegen, zur Verbindung mit den Enden der nachfolgenden, gegabelten Kunststoffzufuhrkammer (6) umfasst und die Innenwandung des Kammerbereiches (8a) durch einen zylindrischen Kragen (10) definiert ist, der eine abgerundete obere Kante besitzt und in geeigneter Weise von der Oberseite dieser Platte (2) hervorsteht, wobei die obere Platte (3) an ihrer Unterseite mit einem ringförmigen und zylindrischen Kanal (12) versehen ist, dessen Endwandung abgerundet und der an seinem Boden offen und von einer solchen Höhe ist, dass er in der Lage ist, sowohl die erste als auch die zweite ringförmige und zylindrische Kammer (8, 14) zu bilden, wobei die Innenwandung dieses Kanals durch einen zylindrischen Kragen (13) definiert ist, der bis zu einem geeigneten Abstand von der Unterseite dieser Platte (3) hervorsteht, wobei das Ganze so gestaltet ist, dass der Kanal (12) der oberen Platte den vorspringenden Bereich des Kragens (10) der Zwischenplatte aufnimmt, der koaxial nahe dem Kragen (13) der oberen Platte liegt und den Kanal (12) in zwei nahe beieinander liegende, miteinander an der Spitze durch eine abgerundete Haarnadelbiegung-Verbindung in Verbindung stehende Teile unterteilt, von welchen der äußere Teil die ringförmige und zylindrische Kammer (8) vervollständigt und der innere Teil die innere ringförmige Kammer (14) zwischen den beiden vorerwähnten Kragen definiert.

12. Extrusionskopf nach Anspruch 11, bei welchem der Axialstift (16) des Kopfes ohne seitliche Lekagen durch den inneren Kragen (13) der oberen Platte (3) tritt und die Innenwandung des Abwärtskanals (C) des Kopfes definiert, wobei seine Außenwandung durch die inneren Axialbohrungen (11, 11') der unteren Platte (1) und der Zwischenplatte (2)definiert ist.

13. Extrusionskopf nach einem oder mehreren der vorhergehenden Ansprüche, **dadurch gekennzeichnet, dass** zwei oder mehr Kopfmodule koaxial aufeinander stapelbar sind, um koextrudierte, röhrenförmige Vorformlinge in solcher Weise auszubilden, dass die verschiedenen ringförmigen und zylindrischen Kammern jedes Kopfmoduls mit Querschnitten ausgebildet sind, die in geeigneter Weise von oben nach unten zunehmen.

## Revendications

1. Tête pour l'extrusion ou la coextrusion des préformes thermoplastiques tubulaires, en particulier pour les machines qui produisent des conteneurs par soufflage, la tête étant composée de plaques ou de disques superposés, dans les faces superposées desquels ont été formées, par perçage, tournage et fraisage, les pièces symétriques composant les chambres qui doivent recevoir le flux de plastique provenant de l'extrudeuse, dont la tète est alimentée au travers d'un trou radial et qui doit être distribué de façon uniforme en termes de débit et de pression dans le canal coaxial tubulaire (C) descendant, de ladite tête, où le flux de plastique venant de l'extrudeuse est alimenté dans la partie intermédiaire d'une chambre en forme de fourche (6) ayant en plan la forme d'un secteur de cercle d'une amplitude angulaire supérieure à 180°, ayant son centre situé sur l'axe de la tête d'extrusion, et des ouvertures identiques (9, 9') à ses extrémités opposées séparées d'une distance angulaire de 180°, la tête étant **caractérisée en ce que** les ouvertures s'ouvrent à la base d'une première chambre annulaire et cylindrique (8) qui est aussi coaxiale avec la tête d'extrusion et d'une hauteur appropriée, où le plastique monte sans rencontrer d'obstacle et à l'extrémité de ladite première chambre le plastique suit une courbure en forme d'épingle à cheveux et entre dans une deuxième chambre annulaire et cylindrique (14) coaxiale avec et interne à la chambre précédente et également exempte d'obstacles, dont l'ouverture inférieure alimente directement ou indirectement le canal descendant de la tête (C), de telle manière que la distance entre les parois de ladite deuxième chambre annulaire et cylindrique (14) est inférieure à la distance entre les parois de la première chambre annulaire et cylindrique amont (8).

2. Tête d'extrusion selon la revendication 1, dans laquelle la chambre d'alimentation (6) en forme de fourche a une forme cylindrique avec des bases arrondies et la distance entre les parois de cette chambre en forme de fourche (6) est égale à celle entre les parois de la chambre annulaire et cylindrique (8) au-dessus d'elle.

3. Tête d'extrusion selon la revendication 2, dans laquelle la première chambre annulaire et cylindrique (8), située au-dessus de la chambre d'alimentation en forme de fourche (6) est plus haute que cette chambre en forme de fourche.

4. Tête d'extrusion selon la revendication 1, dans laquelle les ouvertures (9, 9') qui relient les extrémités de la chambre en forme de fourche (6) aux zones diamétralement opposées de la base de la première chambre annulaire et cylindrique (8) sont réniformes vues en plan.

5. Tête d'extrusion selon la revendication 1, dans laquelle les ouvertures (9, 9') qui relient les extrémités de la chambre en forme de fourche (6) aux zones diamétralement opposées de la base de la première chambre annulaire et cylindrique (8) ont une coupe transversale constante et sont droites et parallèles à l'axe de la tête.

6. Tête d'extrusion selon la revendication 1, dans laquelle les ouvertures (9, 9') qui relient les extrémités de la chambre en forme de fourche (6) aux zones diamétralement opposées de la base de la première chambre annulaire et cylindrique (8) ont leur axe longitudinal parallèle à l'axe de ladite tête et ont une forme qui va en s'élargissant progressivement vers ladite chambre (8).

7. Tête d'extrusion selon la revendication 1, dans laquelle les ouvertures (9, 9') qui relient les extrémités de la chambre en forme de fourche (6) aux zones diamétralement opposées de la base de la première chambre annulaire et cylindrique (8) sont de coupe transversale constante ou de coupe transversale qui va en s'élargissant progressivement vers ladite chambre (8) et leurs axes longitudinaux sont inclinés dans des directions opposées, de façon à donner au flux de plastique atteignant ladite chambre (8) un mouvement composé d'ascension et de rotation.

8. Tête d'extrusion selon la revendication 1, **caractérisée en ce que** chaque module relié à une extrudeuse se compose de trois plaques (1, 2, 3) empilées l'une sur l'autre et reliées à l'aide de vis et de boulons (5).

9. Tête d'extrusion selon la revendication 8, dans laquelle les pièces complémentaires et symétriques (7a, 7b et 6a, 6b) formant un conduit d'alimentation (7) relié à l'extrudeuse, et la chambre cylindrique et en forme de fourche suivante (6) qui divise le flux de plastique en deux, sont produits par fraisage et perçage des surfaces de contact de la plaque inférieure (1) et de la plaque intermédiaire (2), alors que la première (8) et la seconde (14) chambres annulaires et cylindriques, reliées ensemble en une courbe en épingle à cheveux à l'extrémité consécutive et supérieure, sont créées dans les surfaces de contact de la plaque intermédiaire (2) et de la plaque supérieure (3) par simple tournage.

10. La tête d'extrusion selon l'une quelconque des revendications précédentes, dans laquelle les coins de la partie inférieure (6a) de la chambre d'alimentation en forme de fourche (6) peuvent être arrondis en une courbe (17) menant à une connexion appropriée aux extrémités de la partie supérieure (6b) de la même chambre en forme de fourche (6).

11. La tête d'extrusion selon la revendication 9, dans laquelle la plaque intermédiaire (2) comprend, ouverte sur sa face supérieure, une partie (8a) de la première chambre annulaire et cylindrique (8) ou la chambre de plus grand diamètre, avec des ouvertures (9, 9') inférieures, à 180° l'une de l'autre, pour le raccordement aux extrémités de la chambre d'alimentation plastique (6) en forme de fourche sous-jacente et la paroi intérieure de ladite partie (8a) de la chambre est définie par un collier cylindrique (10) ayant un bord supérieur arrondi et saillant de façon appropriée de la face supérieure de cette plaque (2), la plaque supérieure (3) étant équipée sur sa face inférieure d'un canal annulaire et cylindrique (12) dont la paroi d'extrémité est arrondie et ouverte au fond et d'une amplitude telle qu'il est possible de définir la première et la deuxième desdites chambres annulaires et cylindriques (8, 14) et la paroi intérieure de ce canal est définie par un collier cylindrique (13) qui se projète d'une distance appropriée de la face inférieure de cette plaque (3), le tout étant conçu de façon à ce que ledit canal (12) de la plaque supérieure reçoive la partie saillante dudit collier (10) de la plaque intermédiaire, qui repose de façon coaxiale à côté dudit collier (13) de la plaque supérieure, divisant ledit canal (12) en deux parties adjacentes communiquant entre elles en haut par un raccord cintré en épingle à cheveux, dont la partie externe complète la chambre annulaire et cylindrique (8) externe et la partie intérieure définit la chambre cylindrique annulaire interne (14) entre les deux colliers mentionnés ci-dessus.

12. Tête d'extrusion selon la revendication 11, dans laquelle la goupille axiale (16) de ladite tête passe sans fuites latérales à travers le collier intérieur (13) de la plaque supérieure (3) et définit la paroi intérieure du canal descendant (C) de ladite tête, dont la paroi externe est définie par des trous axiaux intérieurs (11, 11') de la plaque inférieure (1) et de la plaque intermédiaire (2).

13. La tête d'extrusion selon une ou plusieurs des revendications précédentes, **caractérisée en ce que** deux modules de tête ou plus peuvent être empilés de façon coaxiale les uns sur les autres pour créer les préformes tubulaires coextrudées de telle manière que les diverses chambres annulaires et cylindriques de chaque module de tête sont conçues avec des sections transversales qui augmentent de haut en bas de façon appropriée.
